# EUROPEAN PATENT APPLICATION

(11) **EP 3 541 066 A1**
(43) Date of publication of application: **18.09.2019**
(21) Application number: 19162482.4
(22) Date of filing: 13.03.2019
(51) Int. Cl.: H04N 7/14, G06F 3/0488, H04N 7/15

(54) **ELECTRONIC WHITEBOARD, IMAGE DISPLAY METHOD, AND CARRIER MEANS**

(30) Priority: 16.03.2018 JP 2018049663
(71) Applicant: Ricoh Company, Ltd., Tokyo 143-8555 (JP)
(72) Inventor: KAWASAKI, Yuichi, Tokyo, 143-8555 (JP)
(74) Representative: SSM Sandmair

(57) **Abstract**

An electronic whiteboard (200) includes: input receiving means (15) for receiving an input to a screen from a user; video signal obtaining means (25) for obtaining a video signal from an information processing apparatus (400-1, 400-2); image generating means (23) for generating image data from the video signal that has been obtained; display control means (19) for displaying, on a display device, the image data that has been generated; and changing means (22) for changing, in response to receipt of the input by the input receiving means (15), a frame rate of the image data displayed by the display control means (19) to a value lower than a value before the input receiving means (15) receives the input.

## Description

### BACKGROUND

### Technical Field

The present invention relates to an electronic whiteboard, an image display method, and carrier means.

### Description of the Related Art

The electronic whiteboards obtain coordinates on a touch screen that are input by moving an electronic pen or a fingertip along the screen, and display a stroke formed of the coordinates connected to each other on a display integrated with the touch screen. Such electronic whiteboards have been enhancing in functionality, and some of them have a function of displaying a screen output from a personal computer (PC) on a display, a function of sharing a stroke with an electronic whiteboard in another site, a function of a teleconference terminal, and the like.

The function of displaying a screen output from a PC consumes many system resources, which may result in, for example, degradation of a handwriting performance. Degradation of a handwriting performance means that, for example, it takes long before a stroke is displayed after handwriting is input by using an electronic pen, a fingertip, or the like, and so-called responsivity decreases.

To prevent degradation of the handwriting performance, it may be effective to reduce the consumption of system resources by the function of displaying a screen output from a PC. As such a technique, a technique for decreasing a display frame rate has been proposed (for example, JP-2015-177332-A). JP-2015-177332-A discloses a video processing apparatus that measures a load when generating video with a predetermined frame rate from a video signal received from an imaging apparatus and generates video at a frame rate corresponding to the load.

However, decreasing the frame rate may degrade the quality of displayed video. It is desirable to control degradation of the handwriting performance while controlling degradation of the quality of an image output from a PC.

### SUMMARY

In one embodiment, the present invention may reside in an electronic whiteboard (200) that includes: input receiving means (15) for receiving an input to a screen from a user; video signal obtaining means (25) for obtaining a video signal from an information processing apparatus (400-1, 400-2); image generating means (23) for generating image data from the video signal that has been obtained; display control means (19) for displaying, on a display device, the image data that has been generated; and changing means (22) for changing, in response to receipt of the input by the input receiving means (15), a frame rate of the image data displayed by the display control means (19) to a value lower than a value before the input receiving means (15) receives the input.

In one embodiment, the present invention may reside in an image display method performed by an electronic whiteboard (200), the image display method including: receiving (S3) an input to a screen from a user; obtaining (S2) a video signal from an information processing apparatus (400-1, 400-2); generating (S8) image data from the video signal that has been obtained; displaying (S10), on a display device, the image data that has been generated; and changing (S7), in response to receipt of the input in the receiving, a frame rate of the image data displayed in the displaying to a value lower than a value before the input is received.

In one embodiment, the present invention may reside in carrier means, such as a recording medium, carrying computer readable code for controlling a computer system to carry out the above-described image display method.

Accordingly, degradation of the handwriting performance in the electronic whiteboard and degradation of the quality of image for output can both be controlled.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIGs. 1A to 1C are diagrams for describing an example of a method for controlling a frame rate of video that is captured from a PC and displayed by an electronic whiteboard according to an embodiment;
FIG. 2 is a diagram illustrating an example configuration of a communication system in which the electronic whiteboard communicates with a server apparatus;
FIG. 3 is a diagram illustrating an example hardware configuration of the electronic whiteboard;
FIG. 4 is a conceptual diagram for describing a method in which a user uses the electronic whiteboard;
FIGs. 5A and 5B are diagrams for describing a screen displayed on a display of the electronic whiteboard;
FIG. 6 is an example of a functional block diagram illustrating the functions of the electronic whiteboard in the form of blocks;
FIG. 7 is an example of a diagram for schematically describing a method for changing a frame rate at which the electronic whiteboard displays images;
FIG. 8 is an example of a sequence diagram illustrating a procedure in which the electronic whiteboard controls a frame rate;
FIG. 9 is an example of a flowchart illustrating a procedure in which an operation detector sets an operation state to "in progress";
FIG. 10 is an example of a flowchart illustrating a procedure in which the operation detector sets an operation state to "not in progress";
FIG. 11 is an example of a sequence diagram illustrating a procedure in which the electronic whiteboard controls a frame rate;
FIG. 12 is an example of a flowchart illustrating a procedure in which the operation detector detects whether an operation is in progress or not in progress;
FIG. 13 is an example of a flowchart for describing change of an operation state to "not in progress" based on measurement with a timer;
FIG. 14 is a diagram illustrating an example configuration of the communication system that performs a videoconference;
FIG. 15 is a diagram illustrating an example of a screen displayed on the display by the electronic whiteboard during a videoconference;
FIG. 16 is an example of a functional block diagram illustrating the functions of the electronic whiteboard in the form of blocks;
FIG. 17 is an example of a sequence diagram illustrating a procedure in which the electronic whiteboard controls a frame rate;
FIG. 18 is an example of a flowchart illustrating a process in which an FPS changer changes an FPS value in accordance with an operation state and a conference state;
FIG. 19 is a diagram illustrating another example configuration of the electronic whiteboard;
FIG. 20 is a diagram illustrating another example configuration of the electronic whiteboard;
FIG. 21 is a diagram illustrating another example configuration of the electronic whiteboard; and
FIG. 22 is a diagram illustrating another example configuration of the electronic whiteboard.

The accompanying drawings are intended to depict embodiments of the present invention and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Hereinafter a description will be given of, as an example of embodiments for carrying out the present invention, example embodiments of an electronic whiteboard and a video display method performed by the electronic whiteboard with reference to the accompanying drawings.

### First Example Embodiment

### Overview of Operation of Electronic Whiteboard

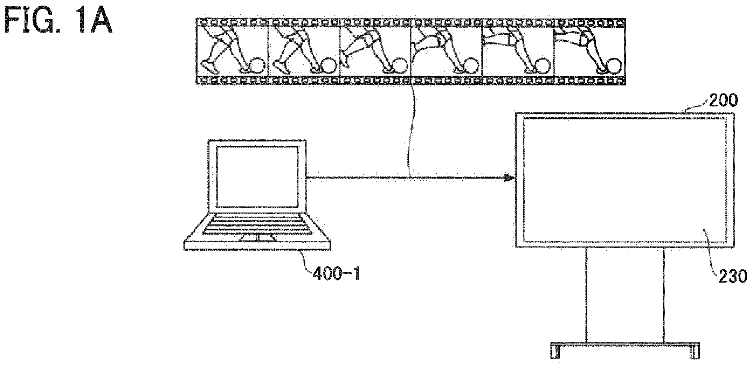

An overview of operation of an electronic whiteboard 200 according to the present embodiments will be described with reference to FIGs. 1A to 1C. FIGs. 1A to 1C are diagrams for describing an example of a method for controlling a frame rate of video that is captured from a personal computer (PC) and displayed by the electronic whiteboard 200 according to the present embodiments.

As illustrated in FIG. 1A, the electronic whiteboard 200 is connected to a PC 400-1 through a cable or wireless communication and obtains video that is displayed on the PC 400-1. The frame rate of the video obtained by the electronic whiteboard 200 is determined by the performance of the PC 400-1 and the standard of the cable or the band of wireless communication. Thus, it may be assumed that the frame rate is substantially constant (for example, A frames per second (fps)) in the present embodiments.

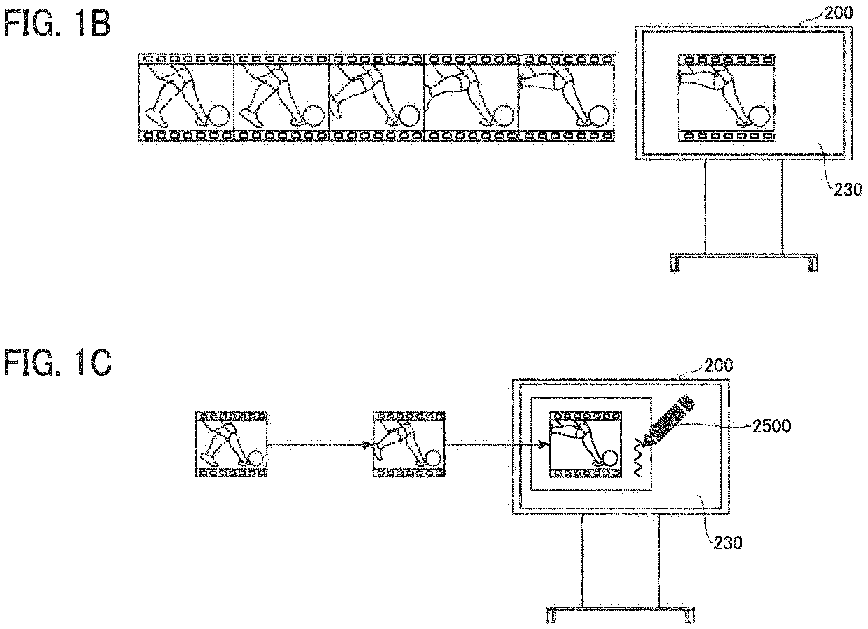

In FIG. 1B, a user is not performing a handwriting operation with an electronic pen or a hand. The electronic whiteboard 200 determines that there is no input from an electronic pen or a finger to a touch screen, captures video transmitted from the PC 400-1, generates output images from the video at a normal frame rate (for example, bb fps), and displays the output images on a display 230. In principle A ≥ bb (fps), but the video may be captured at a frame rate of A < bb (fps) by using a video interpolation function.

On the other hand, in FIG. 1C, the user is performing a handwriting operation with an electronic pen 2500 or a hand. The electronic whiteboard 200 determines that there is an input from the electronic pen 2500 or the hand to the touch screen, generates output images at a frame rate of, for example, aa fps lower than bb fps, which is the normal frame rate, and displays the output images on the display 230.

In this way, the electronic whiteboard 200 according to the present embodiments decreases the frame rate at which video input from the outside is displayed, thereby reducing the amount of system resources consumed by a process of displaying the input video and reducing degradation of a handwriting performance. That is, the decrease in the amount of system resources consumed by the process of displaying the input video enables a central processing unit (CPU) or the like of the electronic whiteboard 200 to quickly detect handwriting and also enables a stroke to be quickly displayed on a screen. As a result, degradation of the handwriting performance is controlled.

When the process of decreasing the frame rate for display is allowed to be performed only while the user is operating the electronic whiteboard 200 with the electronic pen 2500 or the hand, moving images are smoothly reproduced with a smaller inter-frame difference and with enhanced video quality, for example, and degradation of a display performance of video input from the outside can be reduced. Accordingly, it is possible to reduce degradation of the handwriting performance while reducing degradation of the display performance of video input from the outside.

In this disclosure, an electronic whiteboard is a so-called electronic apparatus that obtains coordinates (positions) on a screen indicated by movement of an electronic pen or a fingertip along a touch screen, and displays a stroke formed of the coordinates connected to each other on a display integrated with the touch screen. Any type of touch screen may be used.

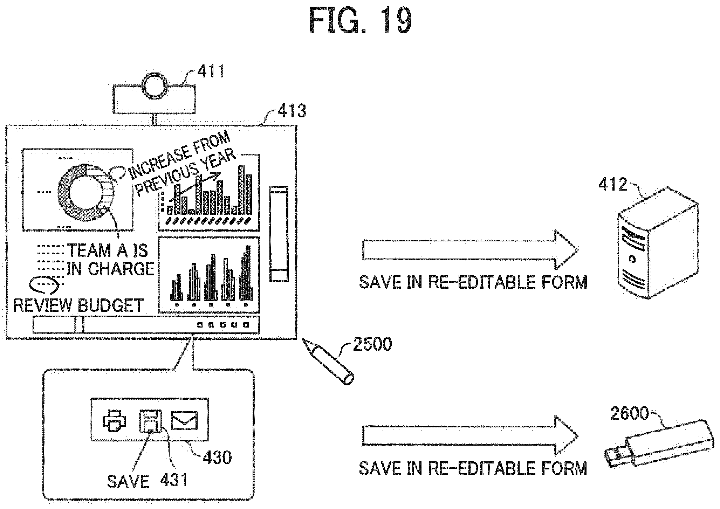

The designation of an electronic whiteboard may vary from product to product, for example, an electronic whiteboard, an electronic information board, or the like. An electronic whiteboard may be called an information processing apparatus because it has functions of a computer. A tablet terminal equipped with a touch screen may be used as an electronic whiteboard. A projector which will be described below with reference to FIG. 19 and so forth may be used as an electronic whiteboard.

As long as the electronic whiteboard is communicably connectable to an information processing apparatus, the electronic whiteboard and the information processing apparatus do not always have to be connected to each other. Further, the electronic whiteboard and the information processing apparatus may be connected to each other either in a wired or wireless manner.

As long as the information processing apparatus is capable of communicating with the electronic whiteboard and transmitting video to the electronic whiteboard, any type of information processing apparatus may be used. For example, the information processing apparatus may be a PC, a tablet terminal, a smartphone, a server, or the like. The video may be the one displayed on a PC, image data in a storage device, video downloaded from a network, or the like.

In this disclosure, a screen is a display area in which the electronic whiteboard displays various pieces of information. The screen may be the whole or part of the display area. Alternatively, the screen may have a portion outside the display area.

A frame rate is the number of frames (the number of still images or the number of pictures) processed per unit time.

An input to the electronic whiteboard may be any input using system resources. In the present embodiments, examples of the input include a handwriting input, a gesture input, and a user interface (UI) input, but the input is not limited thereto.

### Example Configuration of System

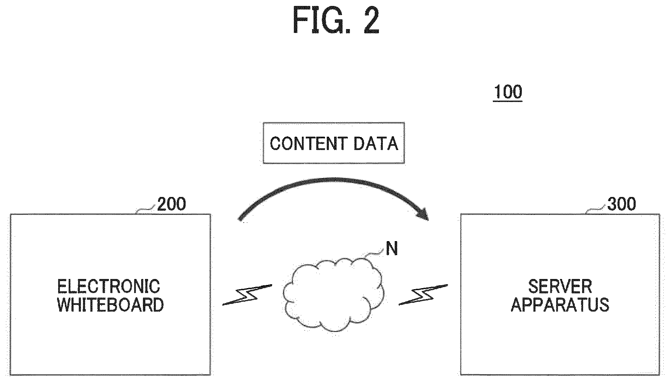

FIG. 2 is a diagram illustrating an example configuration of a communication system 100 in which the electronic whiteboard 200 communicates with a server apparatus 300. The communication system 100 includes the electronic whiteboard 200 and the server apparatus 300. In the communication system 100, the electronic whiteboard 200 and the server apparatus 300 are capable of communicating with each other through a network N.

The electronic whiteboard 200 transmits to the server apparatus 300 stroke information representing a character, an image, or the like input by handwriting, image data generated by capturing a screen of the electronic whiteboard 200, audio data collected by a sound collector such as a microphone, and so forth. The electronic whiteboard 200 according to the present embodiments may transmit to the server apparatus 300 information indicating the dates and times when the stroke information, the image data, and the audio data are obtained, in association with the obtained information.

The electronic whiteboard 200 is capable of communicating with a plurality of terminal apparatuses and is capable of obtaining image data and audio data from the individual terminal apparatuses. In this case, an image displayed on the electronic whiteboard 200 may be shared with the plurality of terminal apparatuses, and the electronic whiteboard 200 serves as a sharing terminal (terminal apparatus) that displays a screen shared by the plurality of terminal apparatuses.

In the following description, various types of data transmitted from the electronic whiteboard 200 to the server apparatus 300 are called content data. The content data according to the present embodiments includes any one of any combination of audio data, image data, moving image data, and information indicating the dates and times when the individual pieces of data are received.

The stroke information according to the present embodiments is coordinate information about a group of points indicating the trajectory of each stroke input by handwriting by a user when a handwriting input is performed on the electronic whiteboard 200. In the present embodiments, an image drawn with a group of points (stroke information) indicating the trajectory of a stroke is a stroke image.

For example, when the electronic whiteboard 200 is used in a conference, the electronic whiteboard 200 according to the present embodiments may transmit to the server apparatus 300 information specifying the name of the conference and content data obtained by the electronic whiteboard 200 during the conference in association with each other.

The server apparatus 300 according to the present embodiments receives and stores the content data. At this time, the server apparatus 300 may store the content data obtained from the electronic whiteboard 200 in units of conferences. The electronic whiteboard 200 according to the present embodiments may perform a voice operation for receiving an operation instruction (command) that is based on speech data by using a voice recognition function of the server apparatus 300.

The audio data according to the present embodiments is data generated by digitalizing waveforms representing all the sounds collected by the sound collector, such as a human voice around the electronic whiteboard 200 and various sounds other than the human voice. Thus, in the present embodiments, speech data representing a human voice around the electronic whiteboard 200 is a part of audio data.

From when the electronic whiteboard 200 detects a touch of a user's hand, the electronic pen 2500, or the like on the display 230 to when the electronic whiteboard 200 detects that the user's hand, the electronic pen 2500, or the like has been moved away from the display 230, a stroke image is being input.

### Example Hardware Configuration

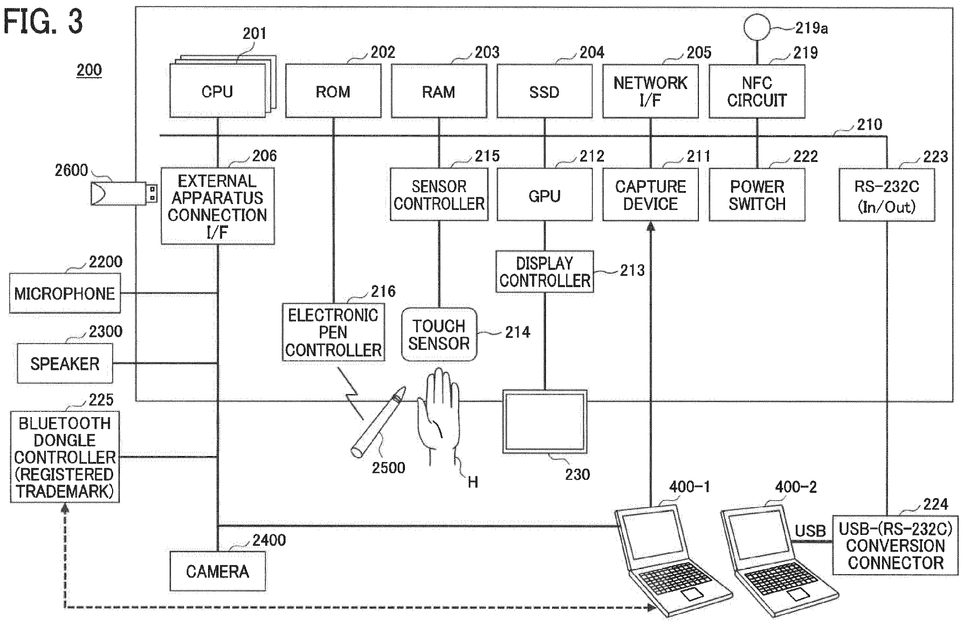

A hardware configuration of the electronic whiteboard 200 according to the present embodiments will be described with reference to FIG. 3. FIG. 3 is a diagram illustrating an example hardware configuration of the electronic whiteboard 200.

As illustrated in FIG. 3, the electronic whiteboard 200 is a terminal apparatus including a CPU 201, a read only memory (ROM) 202, a random access memory (RAM) 203, a solid state drive (SSD) 204, a network interface (I/F) 205, and an external apparatus connection I/F 206.

Among these devices, the CPU 201 controls the operation of the overall electronic whiteboard 200. The CPU 201 may include, for example, a plurality of CPUs or a single CPU.

The ROM 202 stores a program used to drive the CPU 201, such as an initial program loader (IPL). The RAM 203 is used as a work area of the CPU 201. The SSD 204 stores various types of data, such as a program for the electronic whiteboard 200. The network I/F 205 controls communication with a communication network. The external apparatus connection I/F 206 controls communication with a universal serial bus (USB) memory 2600 and external apparatuses (a camera 2400, a speaker 2300, and a microphone 2200).

The electronic whiteboard 200 also includes a capture device 211, a graphics processing unit (GPU) 212, a display controller 213, a touch sensor 214, a sensor controller 215, an electronic pen controller 216, a near-field communication (NFC) circuit 219, an antenna 219a for the NFC circuit 219, and a power switch 222.

Among these devices, the capture device 211 captures video that is displayed on the display of the PC 400-1 as a still image or a moving image. The capture device 211 includes a video interface. There are various types of video interfaces, for example, HDMI (registered trademark), VGA, and DisplayPort (registered trademark). Alternatively, video may be input through a USB interface.

The GPU 212 is a semiconductor chip that handles graphics exclusively. The display controller 213 controls and manages screen display to output an input image generated by the GPU 212 to the display 230 (display device) or the like. The touch sensor 214 implements the function of a touch screen for detecting a touch of the electronic pen 2500, a hand H of a user, or the like on the display 230.

The sensor controller 215 controls a process performed by the touch sensor 214. The touch sensor 214 inputs and detects coordinates by using an infrared blocking scheme. The method for inputting and detecting coordinates is a method in which two light emitting/receiving devices attached to both upper end portions of the display 230 emit a plurality of infrared rays parallel to the display 230, the infrared rays are reflected by a reflection member provided around the display 230, and a light receiving element receives light rays returning along light paths identical to paths of the emitted light rays. The touch sensor 214 outputs to the sensor controller 215 an ID of the infrared rays emitted by the two light emitting/receiving devices and blocked by an object, and the sensor controller 215 specifies a coordinate position which is a touched position of the object.

The electronic pen controller 216 communicates with the electronic pen 2500 to determine whether or not a tip or end of the electronic pen 2500 is in contact with the display 230. The NFC circuit 219 is a communication circuit of NFC, Bluetooth (registered trademark), or the like.

The power switch 222 is a switch for switching between ON and OFF of the power of the electronic whiteboard 200.

The electronic whiteboard 200 also includes a bus line 210. The bus line 210 is an address bus, a data bus, or the like for electrically connecting the individual components illustrated in FIG. 3, such as the CPU 201.

The electronic whiteboard 200 further includes an RS-232C port 223, a conversion connector 224, and a Bluetooth controller 225.

The RS-232C port 223 is connected to the bus line 210 and connects a PC 400-2 or the like to the CPU 201 and so forth. The conversion connector 224 is a connector for connecting the electronic whiteboard 200 to the USB port of the PC 400-2.

The Bluetooth controller 225 is, for example, a controller for communicating with the PC 400-1 or the like using Bluetooth.

The touch sensor 214 is not limited to the one using the infrared blocking scheme. Other various types of sensors may be used, for example, a capacitive touch screen that detects a change in capacitance to specify a touched position, a resistive touch screen that detects a change in voltage of two resistive films facing each other to specify a touched position, and an electromagnetic inductive touch screen that detects electromagnetic induction caused by a touch of an object on a display to specify a touched position. The electronic pen controller 216 may determine whether or not there is a touch of a portion of the electronic pen 2500 griped by a user or another portion of the electronic pen 2500, as well as the tip or end of the electronic pen 2500.

### Use of Electronic Whiteboard

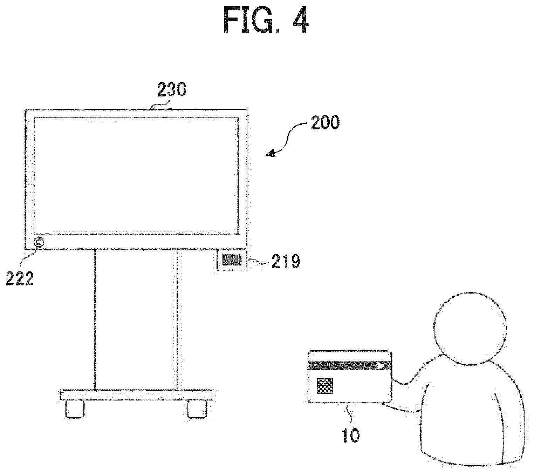

Next, a method for using the electronic whiteboard 200 according to the present embodiments will be described with reference to FIG. 4. FIG. 4 is a conceptual diagram for describing a method in which a user uses the electronic whiteboard 200.

For example, when using the electronic whiteboard 200, user A presses the power switch 222 to display a login screen on the display 230. User A brings his/her IC card 10 close to the NFC circuit 219 of the electronic whiteboard 200, and then the electronic whiteboard 200 reads identification information of the IC card 10 from the IC card 10. Subsequently, the electronic whiteboard 200 transmits to the server apparatus 300 an authentication request including the identification information of the IC card 10. After receiving from the server apparatus 300 a notification indicating that user A has been authenticated, the electronic whiteboard 200 becomes able to save information input by user A in the server apparatus 300 in association with the identification information of the IC card 10.

### Layered Structure of Image Displayed on Display

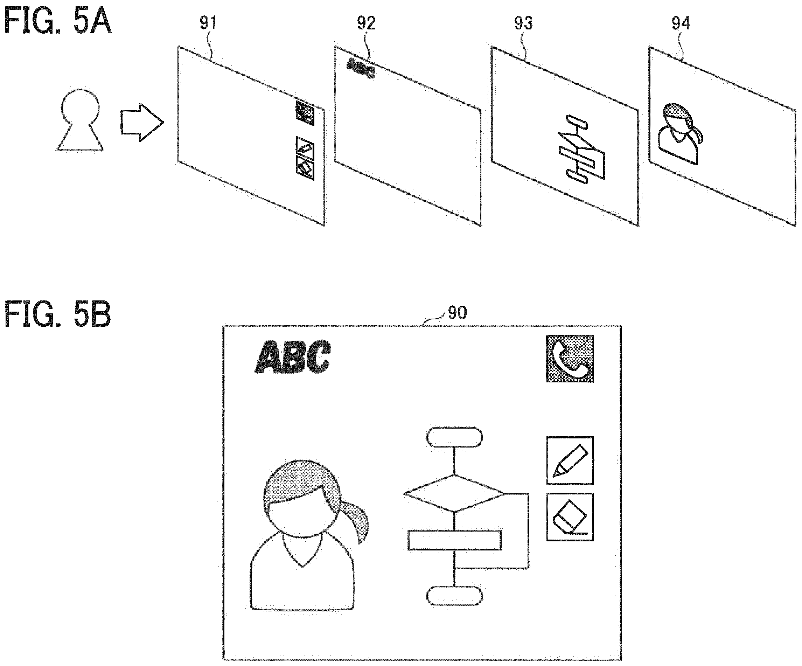

FIGs. 5A and 5B are diagrams for describing a screen displayed on the display 230 of the electronic whiteboard 200. FIG. 5A is a diagram for describing images superimposed on one another, and FIG. 5B is a diagram illustrating an example of a superimposed image 90.

The electronic whiteboard 200 according to the present embodiments superimposes a UI image, a stroke image, an output image, and a background image on one another in accordance with a layout designated in advance to display a resulting superimposed image. The layout includes a superimposition order and a degree of transparency.

The UI image is an image including a menu including buttons or the like to be pressed by a user and is capable of receiving various operations, such as selection of the type of pen, selection of a color, and capturing of an image. The stroke image is an image of one or more strokes drawn based on a handwriting input. The output image is an image output from an external apparatus to the electronic whiteboard 200 (video captured by the electronic whiteboard 200). The background image is, for example, a plain image, an image including grid lines, or the like.

As illustrated in FIG. 5A, the electronic whiteboard 200 has a layer 91 for displaying the UI image, a layer 92 for displaying the stroke image, a layer 93 for displaying the output image output from an external apparatus, such as the PC 400-1, and input to the electronic whiteboard 200, and a layer 94 for displaying the background image.

The electronic whiteboard 200 according to the present embodiments superimposes the individual layers on one another such that the layer 91 is a first layer, the layer 92 is a second layer, the layer 93 is a third layer, and the layer 94 is a fourth layer when the user of the electronic whiteboard 200 views the display 230.

The electronic whiteboard 200 combines image data of the UI image (UI image data), image data of the stroke image (stroke image data), image data of the output image (output image data), and image data of the background image (background image data) to generate image data of the superimposed image 90 with four layers.

### Functions

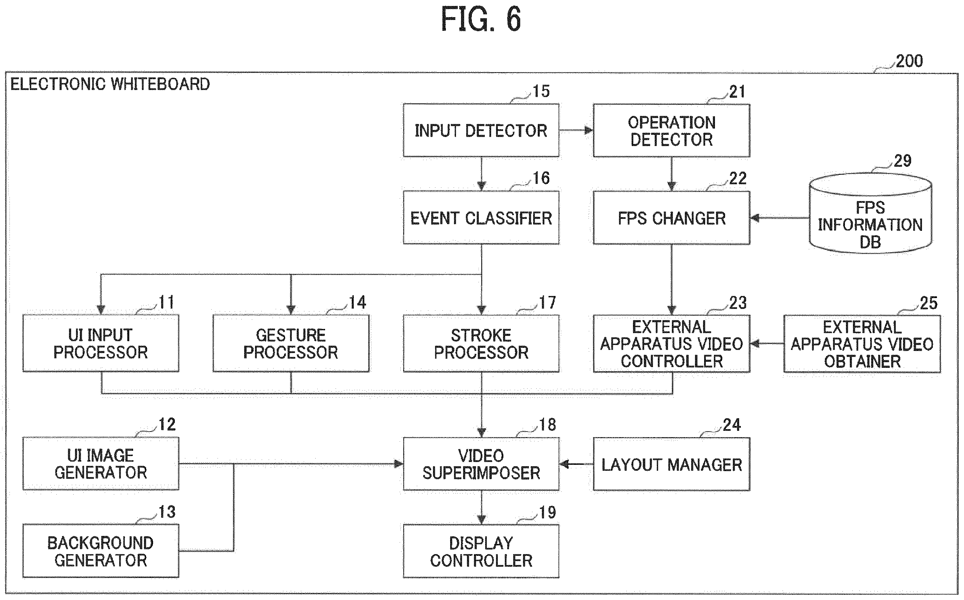

FIG. 6 is an example of a functional block diagram illustrating the functions of the electronic whiteboard 200 in the form of blocks. The electronic whiteboard 200 includes a UI input processor 11, a UI image generator 12, a background image generator (background generator) 13, a gesture processor 14, an input detector 15, an event classifier 16, a stroke processor 17, a video superimposer 18, a display controller 19, an operation detector 21, an FPS changer 22, an external apparatus video controller 23, a layout manager 24, and an external apparatus video obtainer 25. Each of these functions of the electronic whiteboard 200 is a function or means implemented when any one of the components illustrated in FIG. 3 operates in accordance with a command from the CPU 201 executing a program loaded on the RAM 203 from the SSD 204.

The electronic whiteboard 200 also includes an FPS information database (DB) 29 constructed in the ROM 202, the RAM 203, the SSD 204 or the like illustrated in FIG. 3. The FPS information DB 29 contains, registered therein, FPS values corresponding to operation states.

**Table 1**

| Operation state | FPS value |
|---|---|
| In progress | aa (30) [fps] |
| Not in progress | bb (60) [fps] |

Table 1 presents the information stored in the FPS information DB 29. In the FPS information DB 29, FPS values are registered in association with operation states. An operation state indicates whether or not there is an input to the screen of the electronic whiteboard 200, and indicates either "in progress" or "not in progress". "In progress" means that there is an input, whereas "not in progress" means that there is no input. The input includes all of a UI input, a handwriting input, and a gesture input. "In progress" and "not in progress" are associated with respective FPS values. The FPS value for "in progress" is aa fps, whereas the FPS value for "not in progress" is bb fps. While an operation is in progress, a lower frame rate reduces consumption of system resources, and thus bb > aa. In Table 1, aa = 30 and bb = 60, which is merely an example. It is sufficient that aa and bb satisfy the relationship bb > aa. Alternatively, aa may be zero. In this case, video captured from a PC becomes a still image. Appropriate FPS values are set in advance by a manager or the like. Alternatively, the electronic whiteboard 200 may download the FPS information DB 29 from the server apparatus 300.

Referring back to FIG. 6, the input detector 15 detects that the touch sensor 214 has detected a pointing device, such as the electronic pen 2500 or a finger. That is, the input detector 15 detects that a user has performed a handwriting input on the touch screen. The user may operate the touch screen by using the pointing device when performing an operation other than a handwriting input. The other operation includes, for example, enlarging or reducing of the screen, page turning, holding down, and so forth, and these inputs are referred to as gesture inputs. During a gesture input, which consumes system resources, frame rate control may be performed in the present embodiments. However, frame rate control is not necessarily performed for a gesture input when the amount of consumption of system resources is small. For another example, a button on a UI menu may be pressed. Such an input is referred to as a UI input. It is possible to perform frame rate control also for a UI input. However, frame rate control is not necessarily performed for a UI input when the amount of consumption of system resources is small.

When the operation detector 21 detects an input to the touch screen in response to a notification from the input detector 15, the operation detector 21 determines that an input has started (touch-down), that is, an operation is in progress. When the operation detector 21 no longer detests an input to the touch screen, the operation detector 21 determines that the input has finished (touch-up), that is, an operation is not in progress.

The FPS changer 22 changes the frame rate of video captured from an external apparatus connected to the electronic whiteboard 200, such as the PC 400-1. For this purpose, a normal FPS value and an FPS value for reducing a load (an FPS value smaller than the normal FPS value) are managed as illustrated in Table 1 presenting the FPS information DB 29. The operation detector 21 decreases the FPS value when the operation state is "in progress", and returns the FPS value to the original value when the operation state is "not in progress". The FPS changer 22 may change the frame rate used to convert video captured from an external apparatus, such as the PC 400-1, to output images. In addition, the FPS changer 22 may change the frame rate used to output video that is already stored in the SSD 204.

The external apparatus video obtainer 25 detects that a connection of an external apparatus to the electronic whiteboard 200 has been established and captures video from the external apparatus. The establishment of the connection of the external apparatus to the electronic whiteboard 200 is detected as a result of a voltage of video in the PC 400-1 being input to the capture device 211 and the CPU 201 being notified of the input of the voltage by interrupt by the capture device 211.

The external apparatus video controller 23 generates, from the video obtained by the external apparatus video obtainer 25, output images (an example of image data) at a set frame rate. The external apparatus video controller 23 generates one frame (image) from a video signal corresponding to one frame by using a vertical synchronization signal or the like. The video signal is a signal constituting video and may also be referred to as video data. In the present embodiments, the video signal is simply referred to as video.

The distribution of functions between the external apparatus video obtainer 25 and the external apparatus video controller 23 is not necessarily distinct. The external apparatus video obtainer 25 and the external apparatus video controller 23 may cooperate with each other to generate output images at a frame rate changed by the FPS changer 22. For example, the external apparatus video obtainer 25 may capture video at a frame rate changed by the FPS changer 22, that is, may capture video while thinning the video. In the present embodiments, it is sufficient that the frame rate of the output images displayed on the display 230 be changed.

The event classifier 16 classifies an event of an input as a UI input, a gesture input, or a handwriting input in accordance with the input detected by the input detector 15, the coordinates indicating the position of the input, and a press signal generated by pressing with the tip or end of the electronic pen 2500 and detected by the electronic pen controller 216. When a press signal generated by pressing with the tip or end of the electronic pen 2500 is detected, the event is a handwriting input or an eraser operation. When a press signal generated by pressing with the tip or end of the electronic pen 2500 is not detected, the event is a gesture input. An input to a UI component, such as a button, is a UI input. When a press signal generated by pressing with the tip or end of the electronic pen 2500 is not detected, the event may be a marker input, but this is not illustrated in FIG. 6. A marker input is an input method in which a translucent stroke is displayed but is automatically erased in a few seconds. Whether the event is a marker input or a gesture input is determined in accordance with, for example, the number of fingers touching the touch screen.

A handwriting input is an event in which a user presses a point on the display 230 by using the electronic pen 2500, moves the electronic pen 2500 while keeping the pressed state, and eventually moves the electronic pen 2500 away from the display 230. With the handwriting input, for example, alphabetic characters, such as "S" and "T", are drawn on the display 230. The handwriting input includes an event of deleting a stroke and an event of editing a drawn stroke as well as an event of drawing a stroke.

A UI input is an event in which a user presses a predetermined position on the display 230 by using the electronic pen 2500 or the hand H when the UI image illustrated in FIGs. 5A and 5B is displayed on the display 230. With the UI input, for example, the color, width, and so forth of a line to be drawn by the electronic pen 2500 are set.

A gesture input is an event in which a user touches the display 230 with the hand H or moves the hand H along the display 230. For example, by moving the hand H with the hand H being in contact with the display 230, the user is able to perform enlarging (or reducing) of an image, change of a display area, page turning, or the like.

The UI image generator 12 generates a UI image that is set in advance in the electronic whiteboard 200. The background image generator 13 generates a plain image or a grid-line image that assists the user in input. A previously captured image may also be used as a background image.

The layout manager 24 manages layout information for presenting, to the video superimposer 18, a layout of an output image output from the external apparatus video controller 23, a stroke image output from the stroke processor 17, a UI image generated by the UI image generator 12, and a background image generated by the background image generator 13. Accordingly, the layout manager 24 is capable of providing, to the video superimposer 18, an instruction indicating the order in which the output image, the stroke image, the UI image, and the background image are to be superimposed, or an instruction not to display any image.

The video superimposer 18 lays out (superimposes) the output image, the stroke image, the UI image, and the background image on one another in accordance with the layout information output from the layout manager 24. The image resulting from the superimposition is the superimposed image 90.

The display controller 19 displays the superimposed image 90 generated by the video superimposer 18 on the display 230.

### Control of Frame Rate

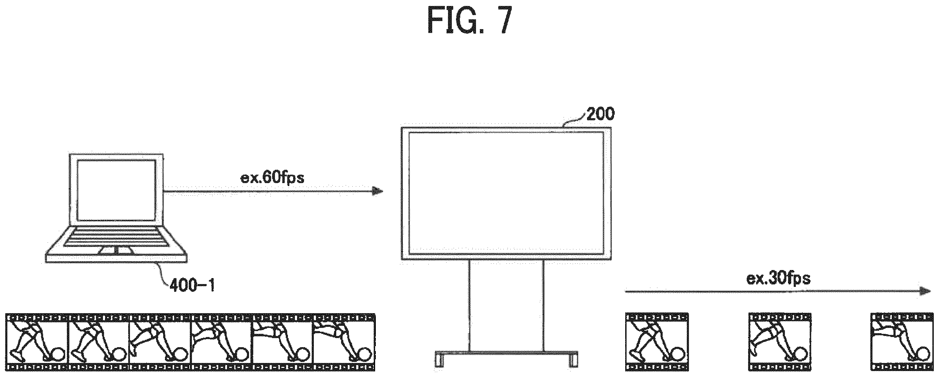

Next, a method for changing a frame rate will be described with reference to FIG. 7. FIG. 7 is an example of a diagram for schematically describing a method for changing a frame rate at which the electronic whiteboard 200 displays images.

The PC 400-1 and the electronic whiteboard 200 are connected to each other through a cable of HDMI (registered trademark), VGA, DisplayPort (registered trademark), or the like. Video is transmitted at a substantially constant frame rate in accordance with the ability of the PC 400-1 and the cable (communication standard). In FIG. 7, the frame rate is 60 fps.

The external apparatus video obtainer 25 of the electronic whiteboard 200 captures video by using the capture device 211. Since the electronic whiteboard 200 is compatible with the same communication standard as that of the PC 400-1, the external apparatus video obtainer 25 is capable of capturing the video at up to 60 fps, which is the same as the ability of the PC 400-1. In a state where there is no input to the screen, the external apparatus video controller 23 generates output images from the captured video at an initial (or normal) frame rate determined by the ability or the like of the electronic whiteboard 200.

On the other hand, in a state where there is an input to the screen, the external apparatus video controller 23 generates output images from the video at a frame rate lower than the initial frame rate. In FIG. 7, for easy understanding, the external apparatus video controller 23 generates output images at 30 fps, which is half the frame rate of the video transmitted by the PC 400-1. In a state where there is an input to the screen, the frame rate at which the captured video is displayed can be lower than in a state where there is no input to the screen.

In a state where there is an input to the screen, the external apparatus video obtainer 25 may capture the video from the PC 400-1 while performing thinning on the frames. Also in this case, the frame rate at which the video is displayed can be decreased.

When the electronic whiteboard 200 is capable of controlling the frame rate of the PC 400-1, the electronic whiteboard 200 may transmit a request for changing the frame rate to the PC 400-1.

### Operation Procedure

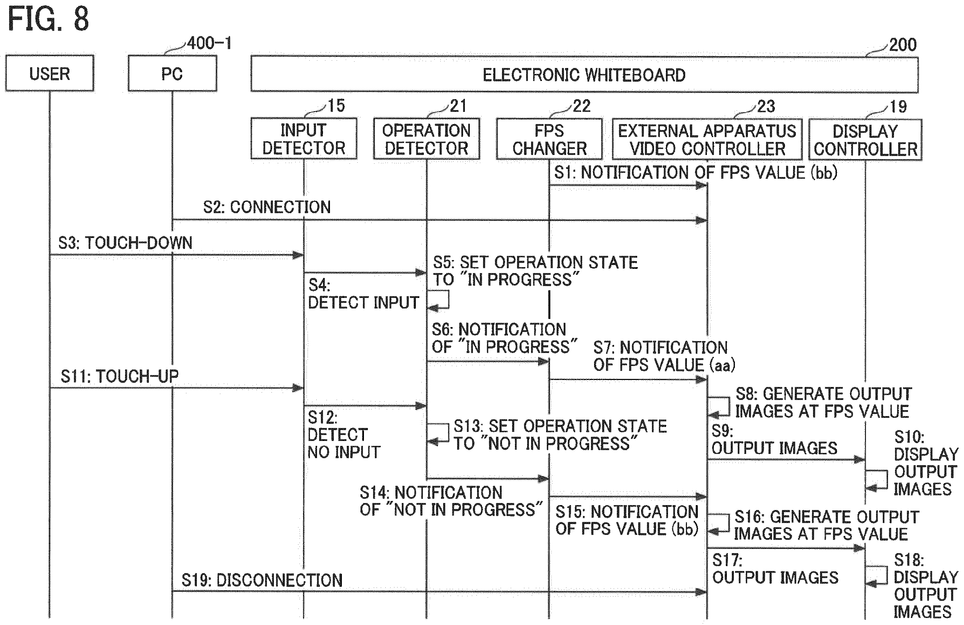

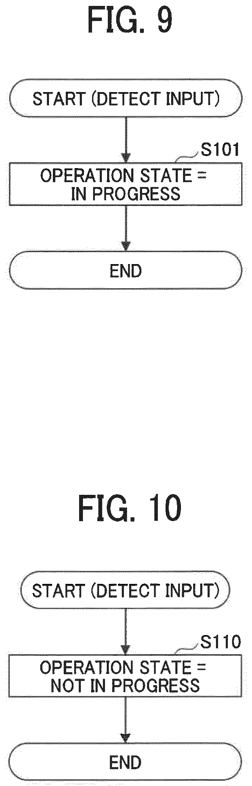

Next, a procedure in which the electronic whiteboard 200 controls a frame rate will be described with reference to FIG. 8. FIG. 8 is an example of a sequence diagram illustrating a procedure in which the electronic whiteboard 200 controls a frame rate. The process illustrated in FIG. 8 starts, for example, in response to turn-on of the power of the electronic whiteboard 200 and activation of the electronic whiteboard 200.
S1: In response to activation of the electronic whiteboard 200, the FPS changer 22 notifies the external apparatus video controller 23 of the normal FPS value stored in the FPS information DB 29. Accordingly, even if the PC 400-1 is connected to the electronic whiteboard 200 immediately after the electronic whiteboard 200 is activated, the external apparatus video controller 23 is capable of generating output images at the normal frame rate that is determined.
S2: A user connects the PC 400-1 to the capture device 211. The external apparatus video obtainer 25 detects an input of video and starts capturing the video at the normal frame rate. The external apparatus video controller 23 starts generating output images.
S3: The user touches the display 230 with the electronic pen 2500 or the hand H, and accordingly the input detector 15 detects a touch-down.
S4: The input detector 15 notifies the operation detector 21 that an input is detected.
S5: The operation detector 21 sets the operation state to "in progress". This process will be described below with reference to FIG. 9.
S6: The operation detector 21 notifies the FPS changer 22 that an operation is in progress.
S7: The FPS changer 22 refers to the FPS information DB 29 to obtain the FPS value associated with "in progress", and notifies the external apparatus video controller 23 of the obtained FPS value.
S8: The external apparatus video controller 23 generates output images from the video captured by the external apparatus video obtainer 25 by using the notified FPS value.
S9: The external apparatus video controller 23 transmits the output images to the display controller 19. A process of outputting a UI image, a stroke image, and a background image is not described here.
S10: The display controller 19 displays the output images on the display 230.
S11: When the user moves the electronic pen 2500 or the hand H away from the display 230, the input detector 15 detects a touch-up. In the case of a handwriting input, an operation from a touch-down to a touch-up draws one stroke.
S12: The input detector 15 notifies the operation detector 21 that no input is detected.
S13: The operation detector 21 sets the operation state to "not in progress". This process will be described below with reference to FIG. 10.
S14: The operation detector 21 notifies the FPS changer 22 that an operation is not in progress.
S15: The FPS changer 22 refers to the FPS information DB 29 to obtain the FPS value (normal FPS value) associated with "not in progress", and notifies the external apparatus video controller 23 of the obtained FPS value.
S16: The external apparatus video controller 23 generates output images from the video obtained by the external apparatus video obtainer 25 by using the notified FPS value.
S17: The external apparatus video controller 23 transmits the output images to the display controller 19. A process of outputting a UI image, a stroke image, and a background image is not described here.
S18: The display controller 19 displays the output images on the display 230.
S19: The user disconnects the PC 400-1 from the electronic whiteboard 200. Accordingly, the external apparatus video obtainer 25 finishes obtaining video, and the external apparatus video controller 23 finishes generating output images.

With this process, the frame rate can be decreased to reduce degradation of the handwriting performance while the user is performing an input operation (while an operation is in progress).

FIG. 9 is an example of a flowchart illustrating a procedure in which the operation detector 21 sets the operation state to "in progress". The process illustrated in FIG. 9 starts in response to detection by the input detector 15 of an input that is classified to any one of a handwriting input, a gesture input, and a UI input.

In response to receipt from the input detector 15 of a notification indicating that an input is detected, the operation detector 21 sets the managed operation state to "in progress" (S101). In the first example embodiment, "an input is detected" corresponds to "in progress", and "no input is detected" corresponds to "not in progress". Thus, in response to detection of an input, the operation state may be set to "in progress".

FIG. 10 is an example of a flowchart illustrating a procedure in which the operation detector 21 sets the operation state to "not in progress". The process illustrated in FIG. 10 starts in response to detection by the input detector 15 of no input (touch-up).

In response to receipt from the input detector 15 of a notification indicating that no input is detected, the operation detector 21 sets the managed operation state to "not in progress" (S110). In the first example embodiment, "an input is detected" corresponds to "in progress", and "no input is detected" corresponds to "not in progress". Thus, in response to detection of no input, the operation state may be set to "not in progress".

As described above, in the electronic whiteboard 200 according to the first example embodiment, the process of decreasing the frame rate at which video obtained from an external apparatus is displayed is allowed to be performed only when the user is operating the electronic whiteboard 200 with the electronic pen 2500 or the hand H. Accordingly, it is possible to reduce degradation of the handwriting performance while reducing degradation of the quality of video input from the outside (while ensuring the display performance of video input from the outside).

In the first example embodiment, the FPS value to be used during an operation is fixed to one value, but the FPS value to be used during an operation may be varied in accordance with, for example, a CPU load during the operation. Accordingly, it is possible to further reduce degradation of the handwriting performance while further reducing degradation of the quality of video input from the outside.

### Second Example Embodiment

In a second example embodiment, a description will be given of an electronic whiteboard 200 that determines, for a certain period after the user performs an input to the electronic whiteboard 200 with the electronic pen 2500 or the hand H, that an operation is in progress even when no input is detected. Such a configuration enables frequent switching between "an operation is in progress" and "an operation is not in progress" to be reduced.

In the second example embodiment, the hardware configuration diagram of the electronic whiteboard 200 in FIG. 3 and the functional block diagram of the electronic whiteboard 200 in FIG. 6 are used. The components denoted by the same reference numerals as those in FIGs. 3 and 6 have similar functions, and thus a description will be given of only main components of the second example embodiment.

In the second example embodiment, the function of the operation detector 21 is different from that in the first example embodiment. The operation detector 21 according to the second example embodiment determines, for a certain period from the start of an input (handwriting input, gesture input, or UI input) to the touch screen in response to a notification from the input detector 15, that an operation is in progress even when any input is not being performed, and determines, after the certain period elapses, that an operation is not in progress when an input to the touch screen is not being performed. Subsequently, the operation detector 21 notifies the FPS changer 22 of the operation state "in progress" or "not in progress".

If it is simply determined that the start of an input (touch-down) equals the start of an operation and the end of an input (touch-up) equals the end of an operation, switching between the operation state "in progress" and the operation state "not in progress" frequently occurs under a condition where a touch-down and a touch-up are frequently performed, for example, during input of characters. The FPS changer 22 changes the frame rate in response to detection of the operation state "in progress" or the operation state "not in progress". Thus, if switching between the operation state "in progress" and the operation state "not in progress" frequently occurs, changes in the frame rate may cause an increase in the system load and a decrease in usability. Thus, for a certain period from the start of an input, it is determined that an operation is in progress, and after the certain period elapses, it is determined that an operation is not in progress.

### Operation Procedure

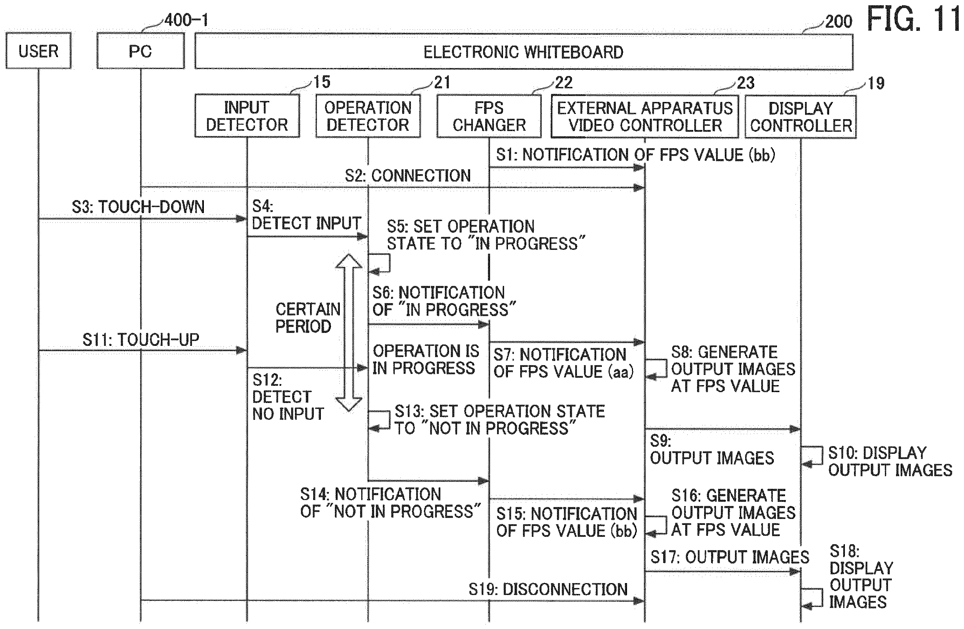

FIG. 11 is an example of a sequence diagram illustrating a procedure in which the electronic whiteboard 200 controls a frame rate. Referring to FIG. 11, a description will be given mainly of the difference from FIG. 8.

Steps S1 to S10 are similar to those in FIG. 8. Steps S11 and S12 may also be similar to those in FIG. 8, but the operation detector 21 continues to detect the operation state "in progress" for a certain period from when an input is detected.

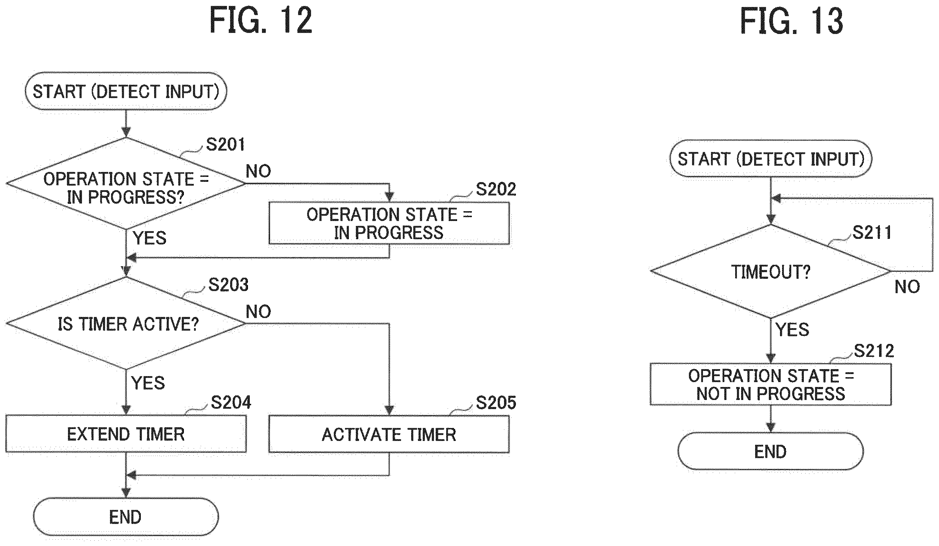

S13: The operation detector 21 does not set the operation state to "not in progress" even when receiving a notification indicating that no input is detected. After the certain period elapses from the last notification indicating that an input is detected, the operation detector 21 sets the operation state to "not in progress". This process will be described below with reference to FIGs. 12 and 13.

S14: The operation detector 21 notifies the FPS changer 22 that an operation is not in progress. The following steps S15 to S19 may be similar to those in FIG. 8.

FIG. 12 is an example of a flowchart illustrating a procedure in which the operation detector 21 detects whether an operation is in progress or not in progress. The process illustrated in FIG. 12 starts in response to detection of a handwriting input by the input detector 15.

In response to receipt from the input detector 15 of a notification indicating that an input is detected, the operation detector 21 determines whether or not the managed operation state is currently "in progress" (S201).

If the determination result in step S201 is "Yes", the operation state is not to be changed, and the process proceeds to step S203.

If the determination result in step S201 is "No", the operation state is to be changed, and the operation detector 21 sets the operation state to "in progress" (S202).

Subsequently, the operation detector 21 determines whether or not a timer is active (S203). The timer is used to measure the certain period in the sequence diagram in FIG. 11. The certain period may be appropriately set, for example, to about five seconds. In one example, an approximate period over which the user performs a series of handwriting input operations is set. The certain period may be settable by the user. The electronic whiteboard 200 may learn an average period for a series of handwriting input operations, and a value obtained through the learning may be set as the certain period.

If the timer is active (Yes in S203), the operation detector 21 extends the timer to newly start measuring the certain period (S204). To extend the timer means to reset the timer. As a result of reset, an initial value of the certain period is set, and thus the timer is capable of starting measuring the certain period from the beginning.

If the timer is not active (No in S203), the operation detector 21 activates the timer to start measuring the certain period (S205). After being activated, the timer starts measurement from the initial value of the certain period.

In this way, the operation detector 21 starts measuring the certain period from the beginning every time a handwriting input is detected, and determines, until the certain period elapses, that an operation is in progress. Accordingly, frequent change in the frame rate of output images does not occur.

FIG. 13 is an example of a flowchart for describing change of the operation state to "not in progress" based on measurement with the timer. The process illustrated in FIG. 13 starts in response to activation of the timer.

The operation detector 21 determines whether or not a timeout has occurred (measurement of the certain period has been completed) in the timer (S211). As described above with reference to FIG. 12, reset may be performed once or more until timeout occurs.

If a timeout has not occurred (No in S211), the operation state remains "in progress".

If a timeout has occurred in the timer (Yes in S211), the operation detector 21 changes the operation state to "not in progress" (S212). Accordingly, the frame rate of output images can be changed to the pre-change value (normal FPS value).

As described above, in the electronic whiteboard 200 according to the second example embodiment, control is performed to reduce frequent switching between the operation state "in progress" and the operation state "not in progress". Thus, it is possible to reduce an increase in the system load and a decrease in usability, while obtaining the effects of the first example embodiment.

### Third Example Embodiment

In a third example embodiment, a description will be given of an electronic whiteboard 200 capable of changing an FPS value not only in accordance with whether or not an operation is in progress but also in accordance with whether or not a videoconference is in progress while an operation is in progress and whether or not a videoconference is in progress while an operation is not in progress.

### Videoconference

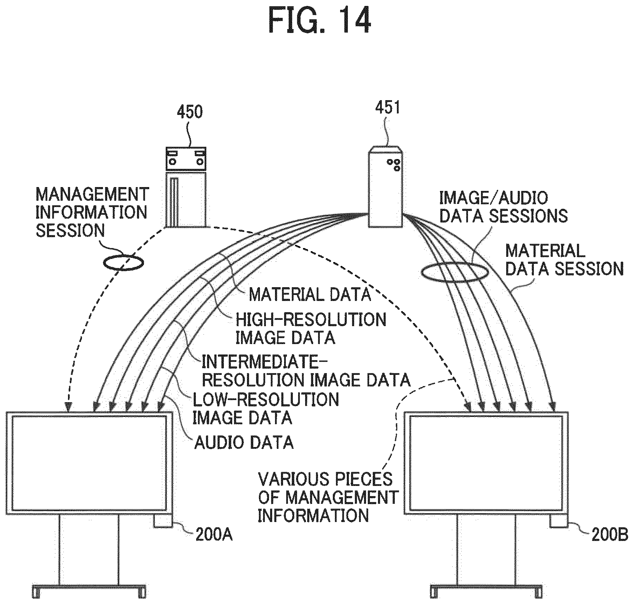

First, a description will be given of an example configuration in which the communication system 100 performs a videoconference, with reference to FIG. 14. FIG. 14 illustrates an example configuration of the communication system 100 that performs a videoconference. The communication system 100 includes electronic whiteboards 200A and 200B capable of communicating with each other through a network, a management system 450, and a relay apparatus 451.

During a videoconference, image data generated by taking an image of participants and their surroundings, audio data including voices of the participants, and material data displayed on the display 230 by the electronic whiteboard 200A (these three pieces of data are referred to as content data) are transmitted from the electronic whiteboard 200A as a transmission source to the electronic whiteboard 200B participating in the videoconference. The electronic whiteboard 200B participating in the videoconference transmits content data similarly. Each of the electronic whiteboards 200A and 200B that has received the content data causes the display 230 to display the image data and the material data and causes a speaker to output the audio data. With such a process being performed continuously, remote participants are capable of participating in the videoconference.

The communication system 100 according to the present embodiments is described as being applied to a videoconference. The communication system 100 is also applied to a communication system or a data communication system. The communication system 100 includes a data providing system in which content data is unidirectionally transmitted from one electronic whiteboard 200 to a plurality of other electronic whiteboards 200 via the management system 450 or the relay apparatus 451. A videoconference may also be referred to as a teleconference.

Between the electronic whiteboards 200A and 200B used in the conference, four sessions are established via the relay apparatus 451. The four sessions are used to transmit and receive four pieces of data: high-resolution image data, intermediate-resolution image data, low-resolution image data, and audio data. In FIG. 14, these four sessions are collectively illustrated as image/audio data sessions.

In addition, a material data session for transmitting and receiving conference material data is established via the relay apparatus 451 in FIG. 14. This enables each electronic whiteboard 200 to transmit and receive material data in a session (band) different from the sessions of audio data and image data.

The case where the content data is transmitted and received via the relay apparatus 451 is merely an example, and the content data may be transmitted and received via the management system 450. However, with the relay apparatus 451 being installed separately from the management system 450, the load can be distributed. There is also a system in which two or more electronic whiteboards 200 transmit and receive content data without involving the relay apparatus 451. In this case, the electronic whiteboards 200 in individual sites are capable of directly communicating with each other through the Internet.

As illustrated in FIG. 14, in the communication system 100, a management information session for transmitting and receiving various pieces of management information is established between the electronic whiteboards 200A and 200B in the individual sites via the management system 450. In the management information session, determination of an on-line state (conference is in progress), an on-line state (idling), or an off-line state, band monitoring, and so forth are performed, and the state of each electronic whiteboard 200 is recorded in the management system 450.

In response to login to the management system 450 by the electronic whiteboard 200A, the management system 450 transmits to the electronic whiteboard 200A a list of one or more destination terminals (the electronic whiteboard 200B as a destination) with which a videoconference can be held. A similar process is performed for the electronic whiteboard 200B as a destination. When one electronic whiteboard 200 (for example, the electronic whiteboard 200A) calls the other electronic whiteboard 200 (for example, the electronic whiteboard 200B) and the electronic whiteboard 200B responds, the management system 450 decides on the relay apparatus 451 and sets, to the relay apparatus 451, the two electronic whiteboards 200A and 200B that are to have a videoconference. In addition, the management system 450 notifies each of the electronic whiteboards 200A and 200B that are to participate in the videoconference of the IP address or the like of the relay apparatus 451. Accordingly, image/audio data sessions for the videoconference are established, and the relay apparatus 451 becomes able to relay content data to each electronic whiteboard 200 participating in the videoconference.

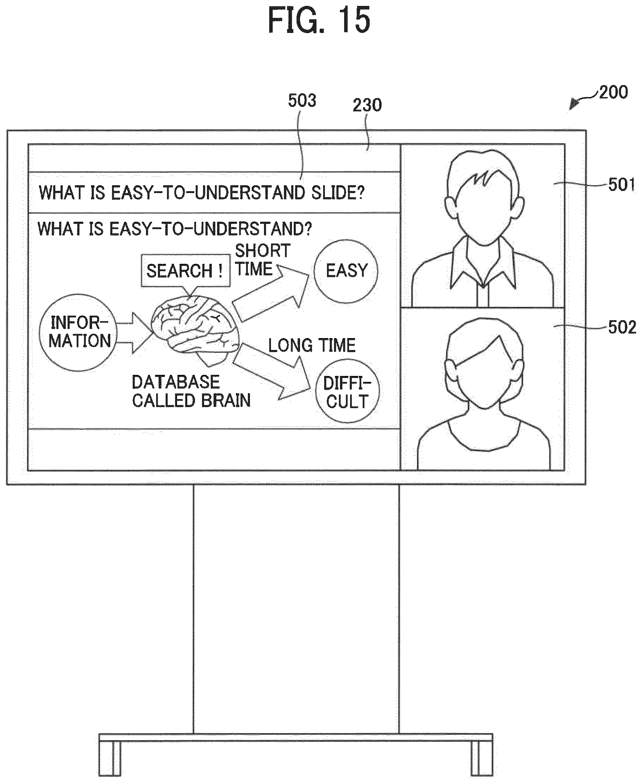

FIG. 15 illustrates an example of a screen displayed on the display 230 by the electronic whiteboard 200 during a videoconference. During the videoconference, image data 502 at a local site and image data 501 at a site of the counterpart of the videoconference are simultaneously displayed. Also, an output image 503 captured at a predetermined frame rate by the electronic whiteboard 200 from the PC 400-1 is simultaneously displayed. On the output image 503, a UI image, a background image, and a stroke image are superimposed.

In this way, a user is able to participate in the videoconference while viewing the image data 501 of the site of the counterpart, the image data 502 of the local site, and video (the output image 503) captured from the PC. The layout illustrated in FIG. 15 is an example. Alternatively, only the output image 503 may be displayed in a larger size. When the number of sites are three or more, the layout may be different.

### Functions of Electronic Whiteboard

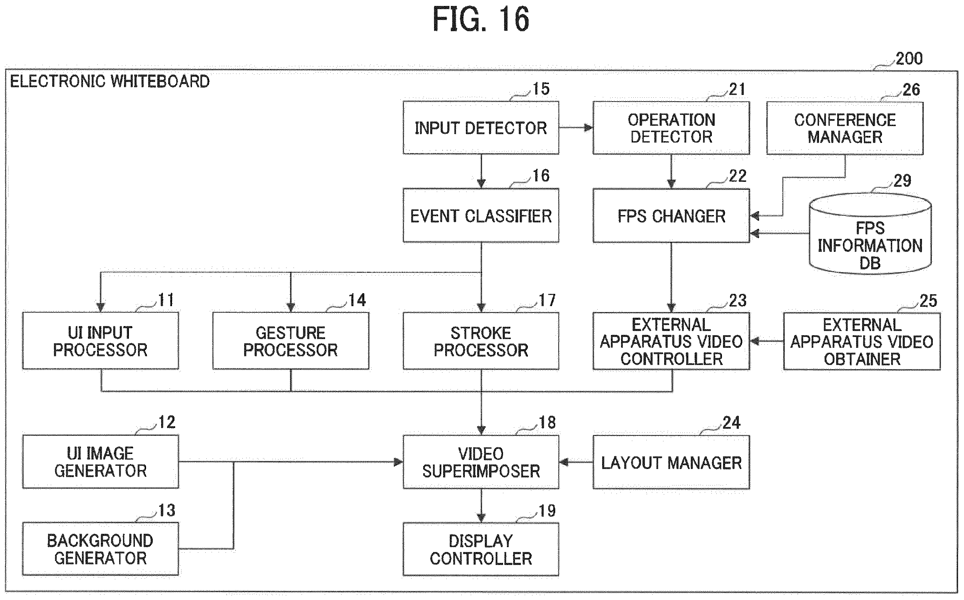

FIG. 16 is an example of a functional block diagram illustrating the functions of the electronic whiteboard 200 in the form of blocks. Referring to FIG. 16, a description will be given mainly of the difference from FIG. 6. The electronic whiteboard 200 according to the third example embodiment further includes a conference manager 26. The conference manager 26 communicates with the management system 450 to manage the start and end of a videoconference. For example, the conference manager 26 determines, in response to establishment of the image/audio data sessions, that a videoconference has started, and determines, in response to disconnection of the image/audio data sessions, that the videoconference has ended. The disconnection of the image/audio data sessions means that at least one of the electronic whiteboards 200 notifies the management system 450 of the disconnection and the relay apparatus 451 ends relaying image data and audio data.

The conference manager 26 notifies the FPS changer 22 of a conference state of the videoconference (in progress or not in progress). Thus, the FPS changer 22 according to the third example embodiment is capable of changing a frame rate in accordance with the operation state and the conference state. While the videoconference is in progress, the processes of transmitting, receiving, and displaying content data consume the system resources of the electronic whiteboard 200. Thus, the handwriting performance may be degraded as in the case of displaying video captured from the PC 400-1.

In the third example embodiment, the frame rate is changed in accordance with the conference state of a videoconference, and thus degradation of the handwriting performance can be reduced even during the videoconference.

**Table 2**

| Operation state | Conference state | FPS value |
|---|---|---|
| In progress | In progress | cc (15) [fps] |
| In progress | Not in progress | dd (30) [fps] |
| Not in progress | In progress | ee (45) [fps] |
| Not in progress | Not in progress | ff (60) [fps] |

Table 2 presents the information stored in the FPS information DB 29 according to the third example embodiment. In the FPS information DB 29, FPS values are registered in association with operation states and conference states. An operation state indicates either "in progress" or "not in progress, and a conference state indicates either "in progress" or "not in progress". Thus, there are four states in total and an FPS value is associated with each state. In one example, the frame rate decreases as the amount of consumption of system resources increases, and thus the frame rates satisfying cc < dd < ee < ff are set.

The values in Table 2 are merely examples. For example, dd (30) associated with the case where an operation is in progress and a conference is not in progress and ee (45) associated with the case where an operation is not in progress and a conference is in progress may be equivalent to each other, or dd may be higher than ee.

### Operation Procedure

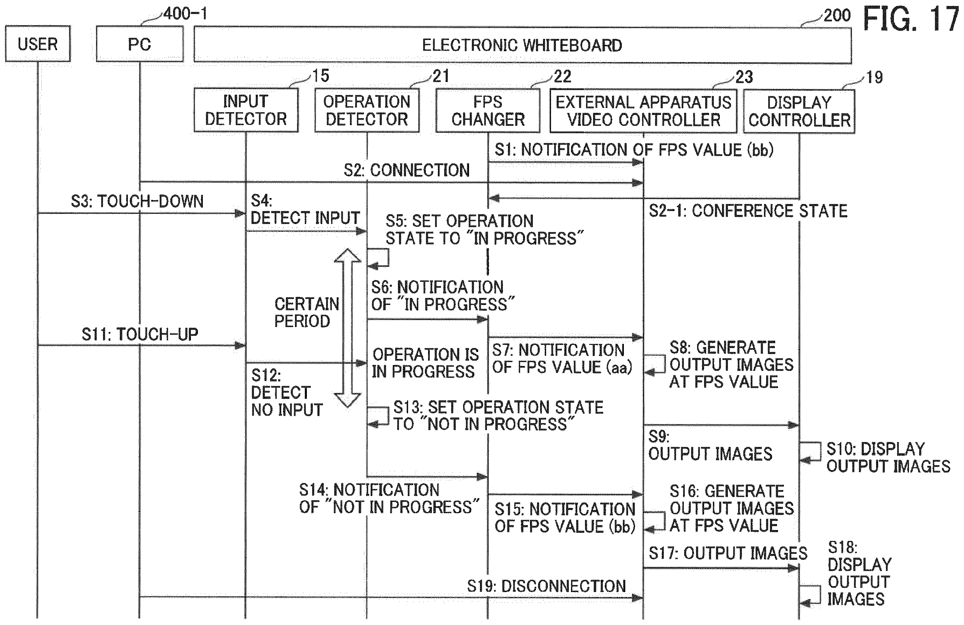

FIG. 17 is an example of a sequence diagram illustrating a procedure in which the electronic whiteboard 200 controls a frame rate. Referring to FIG. 17, a description will be given mainly of the difference from FIG. 11.

The sequence diagram in FIG. 17 further includes step S2-1.

S2-1: The conference manager 26 notifies the FPS changer 22 of a current conference state (in progress or not in progress) every time the conference state changes. Thus, the timing at which the notification of the conference state is given is not limited to the timing of step S2-1 in FIG. 17. The FPS changer 22 is capable of determining an FPS value with reference to the FPS information DB 29 in Table 2. The following steps may be similar to those in FIG. 11.

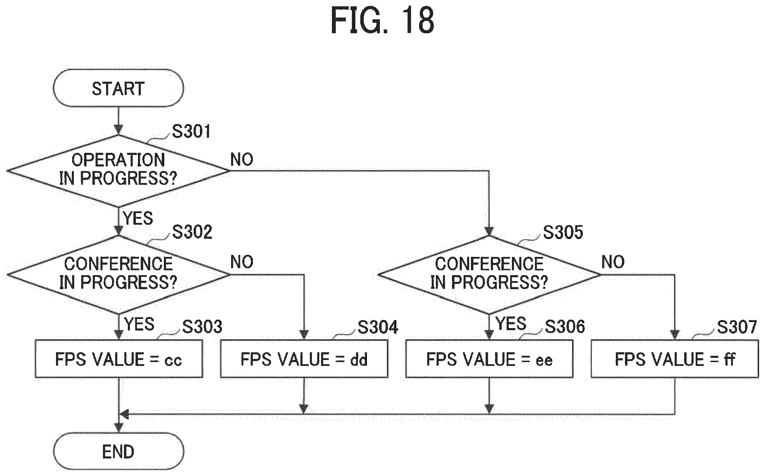

Fig. 18 is an example of a flowchart illustrating a process in which the FPS changer 22 changes an FPS value in accordance with an operation state and a conference state. The process illustrated in FIG. 18 starts in response to a change in at least one of an operation state and a conference state.

The FPS changer 22 determines whether or not the operation state is "in progress" (S301). If the determination result in step S301 is Yes, the FPS changer 22 determines whether or not the conference state is "in progress" (S302).

If the determination result in step S302 is "Yes", the FPS changer 22 sets the FPS value to cc fps (S303).

If the determination result in step S302 is "No", the FPS changer 22 sets the FPS value to dd fps (S304).

If the determination result in step S301 is "No", the FPS changer 22 determines whether or not the conference state is "in progress" (S305).

If the determination result in step S305 is "Yes", the FPS changer 22 sets the FPS value to ee fps (S306).

If the determination result in step S305 is "No", the FPS changer 22 sets the FPS value to ff fps (S307).

### Conclusion

As described above, in the electronic whiteboard 200 according to the third example embodiment, the frame rate of video obtained from the PC 400-1 is determined by considering not only an operation state but also a conference state, and thus it is possible to reduce degradation of the handwriting performance even when the electronic whiteboard 200 is being used in a conference, while obtaining the effects of the first and second example embodiments.

In the third example embodiment, the sequence diagram in FIG. 17 has been described in combination with the second example embodiment, but the sequence diagram in FIG. 17 may be combined with the first example embodiment.

### Modification Example of Third Example Embodiment

Furthermore, the frame rate may be changed in accordance with the performance of the electronic whiteboard 200. As the performance of the electronic whiteboard 200 increases, the handwriting performance is less likely to degrade even if the system resources are consumed. The performance of the electronic whiteboard 200 depends on the performance of the CPU 201, the performance of the GPU 212, the performance (including capacity) of the RAM 203, the performance of the capture device 211, and so forth. A difference in these hardware elements is reflected in the types of electronic whiteboard 200. Thus, each electronic whiteboard 200 may change the frame rate in accordance with the type of the electronic whiteboard 200. The electronic whiteboard 200 holds information indicating its type in the ROM 202, as information on the performance of the electronic whiteboard 200. Table 3 presents an example of FPS values that are set in accordance with the types of electronic whiteboard 200.

**Table 3**

| Operation state | Conference state | Type of electronic whiteboard | FPS value |
|---|---|---|---|
| In progress | In progress | Type A | gg [fps] |
| In progress | In progress | Type B | hh [fps] |
| In progress | Not in progress | Type A | ii [fps] |
| In progress | Not in progress | Type B | jj [fps] |
| Not in progress | In progress | Type A | kk [fps] |
| Not in progress | In progress | Type B | ll [fps] |
| Not in progress | Not in progress | Type A | mm [fps] |
| Not in progress | Not in progress | Type B | nn [fps] |

Table 3 presents the information stored in the FPS information DB 29 according to the present modification example. In the FPS information DB 29, FPS values are registered in association with operation states, conference states, and the types of electronic whiteboard 200. An operation state indicates either "in progress" or "not in progress, and a conference state indicates either "in progress" or "not in progress". The type is either "type A" or "type B" (there may be more types). Here, it is assumed that the relationship "the performance of type A < the performance of type B" is satisfied. Thus, there are eight states and an FPS value is associated with each state. In one example, the frame rate decreases as the amount of consumption of system resources increases, and thus the frame rates satisfying gg < hh <ii < jj < kk < ll < mm < nn are set. Specific FPS values are appropriately set. For example, the values in Table 3 may be set based on a value of 30 fps.

The FPS changer 22 is capable of determining an FPS value in accordance with an operation state and a conference state on the basis of the type stored in the ROM 202 of the electronic whiteboard 200.

### Other Application Examples

Example embodiments for carrying out the present invention have been described above, but the present invention is not limited to these example embodiments, and various modifications and replacements can be added without deviating from the gist of the present invention.

### Another Example 1 of Configuration of Electronic Whiteboard

According to the present embodiments, the electronic whiteboard 200 includes a large touch screen. However, the electronic whiteboard 200 is not limited to the one including a touch screen.

FIG. 19 is a diagram illustrating another example configuration of the electronic whiteboard 200. In FIG. 19, a projector 411 is attached to an upper side of a normal whiteboard 413. The projector 411 corresponds to the electronic whiteboard 200. The normal whiteboard 413 is not a flat-panel display integrated with a touch screen, but is a whiteboard on which a user directly handwrites something by using a marker. The whiteboard may be a blackboard, and it is sufficient that the whiteboard have a flat surface with a sufficient area for projecting video thereto.

The projector 411 includes an optical system with a very short focal length, and is capable of projecting video with small distortion to the whiteboard 413 from a distance of about 10 centimeters. The video may be transmitted from the PC 400-1 connected in a wireless or wired manner or may be stored in the projector 411.

The user performs handwriting on the whiteboard 413 by using the dedicated electronic pen 2500. The electronic pen 2500 includes, at its end portion, for example, a light emitter that is turned on and emits light when the user presses the electronic pen 2500 to the whiteboard 413 for handwriting. The light is not visible to the eyes of the user because the light has a wavelength of near-infrared light or infrared light. The projector 411 includes a camera. The camera takes an image of the light emitter, analyzes the image, and specifies the direction of the electronic pen 2500. The electronic pen 2500 emits a sound wave as well as light, and the projector 411 calculates a distance in accordance with the arrival time of the sound wave. The position of the electronic pen 2500 can be specified by using the direction and the distance. A stroke is drawn (projected) at the position of the electronic pen 2500.

The projector 411 projects a menu 430. Thus, in response to pressing of a button with the electronic pen 2500 by the user, the projector 411 specifies the pressed button by using the position of the electronic pen 2500 and a switch-ON signal. For example, in response to pressing of a save button 431, a stroke (a group of coordinates) handwritten by the user is saved by the projector 411. The projector 411 saves handwriting information in a server 412, a USB memory 2600, or the like determined in advance. The handwriting information is saved in units of pages. The handwriting information is saved in the form of coordinates, not in the form of image data, and thus can be re-edited by the user.

When being applied to the present embodiments, the projector 411 captures video from a video interface and determines whether or not an operation is in progress in accordance with whether or not the electronic pen 2500 is being used in a handwriting operation (whether light is being emitted or whether communication is being performed). Thus, even in the electronic whiteboard 200 using the projector 411, degradation of the handwriting performance at the time of displaying video from the PC 400-1 can be reduced similarly.

### Another Example 2 of Configuration of Electronic Whiteboard

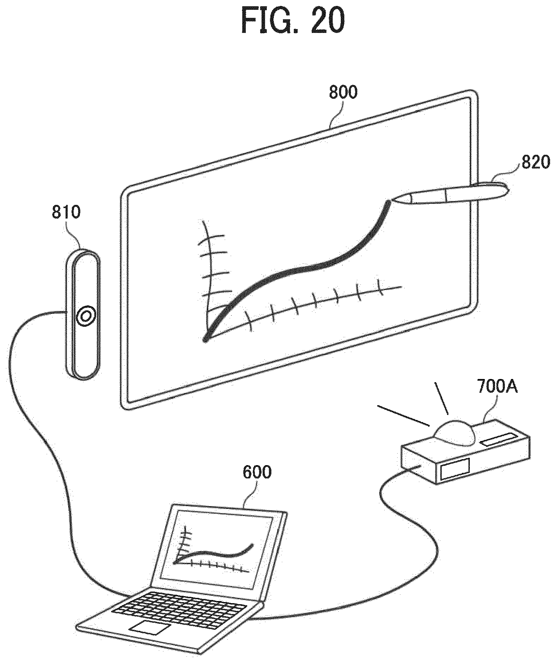

FIG. 20 is a diagram illustrating another example configuration of the electronic whiteboard 200. In the example illustrated in FIG. 20, the electronic whiteboard 200 includes a terminal apparatus 600, an image projecting apparatus 700A, and a pen motion detecting apparatus 810.

The terminal apparatus 600 is connected to the image projecting apparatus 700A and the pen motion detecting apparatus 810 in a wired manner. The image projecting apparatus 700A projects image data received from the terminal apparatus 600 onto a screen 800.

The pen motion detecting apparatus 810 communicates with an electronic pen 820 and detects a motion of the electronic pen 820 near the screen 800. Specifically, the pen motion detecting apparatus 810 detects coordinate information representing a point indicated by the electronic pen 820 on the screen 800 and transmits the coordinate information to the terminal apparatus 600.

The terminal apparatus 600 generates, based on the coordinate information received from the pen motion detecting apparatus 810, image data of a stroke image input by the electronic pen 820, and causes the image projecting apparatus 700A to draw the stroke image on the screen 800.

The terminal apparatus 600 also generates superimposed image data representing a superimposed image that is obtained by combining a background image projected by the image projecting apparatus 700A and the stroke image input by the electronic pen 820. Another Example 3 of Configuration of Electronic Whiteboard

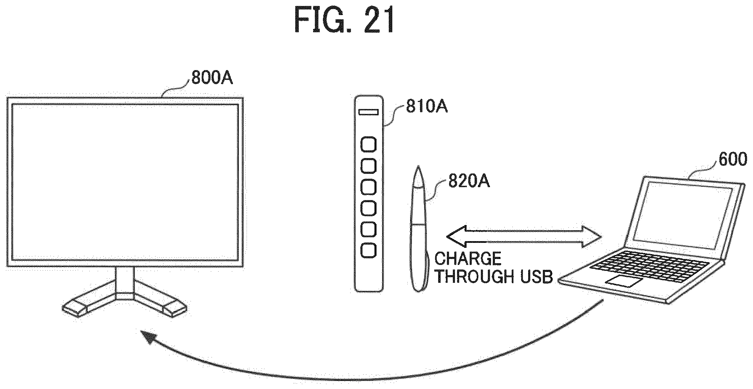

FIG. 21 is a diagram illustrating an example configuration of the electronic whiteboard 200. In the example illustrated in FIG. 21, the electronic whiteboard 200 includes the terminal apparatus 600, a display 800A, and a pen motion detecting apparatus 810A.

The pen motion detecting apparatus 810A is disposed near the display 800A, detects coordinate information representing a point indicated by an electronic pen 820A on the display 800A, and transmits the coordinate information to the terminal apparatus 600. In the example illustrated in FIG. 21, the electronic pen 820A may be charged by the terminal apparatus 600 through a USB connector.

The terminal apparatus 600 generates, based on the coordinate information received from the pen motion detecting apparatus 810A, image data of a stroke image input by the electronic pen 820A, and causes the display 800A to display the stroke image. Another Example 4 of Configuration of Electronic Whiteboard

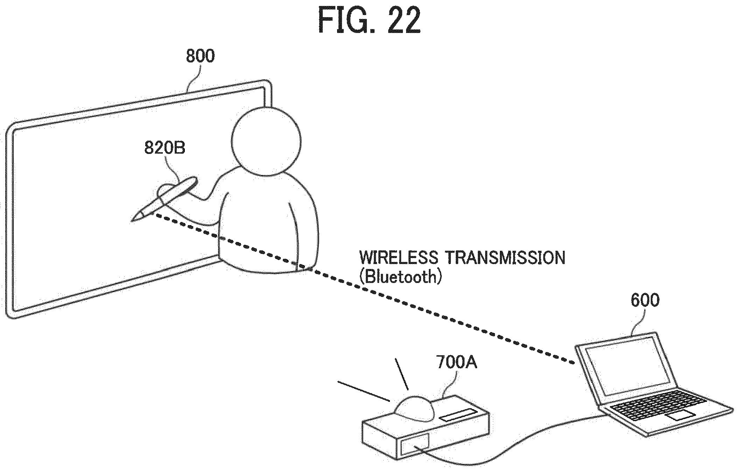

FIG. 22 is a diagram illustrating an example configuration of the electronic whiteboard 200. In the example illustrated in FIG. 22, the electronic whiteboard 200 includes the terminal apparatus 600 and the image projecting apparatus 700A.

The terminal apparatus 600 performs wireless communication (Bluetooth or the like) with an electronic pen 820B and receives coordinate information representing a point indicated by the electronic pen 820B on the screen 800. The terminal apparatus 600 generates, based on the received coordinate information, image data of a stroke image input by the electronic pen 820B, and causes the image projecting apparatus 700A to project the stroke image.

The terminal apparatus 600 also generates superimposed image data representing a superimposed image that is obtained by combining a background image projected by the image projecting apparatus 700A and a stroke image input by the electronic pen 820B.

As described above, the foregoing embodiments can be applied to various system configurations.

Alternatively, for example, the electronic whiteboard may change a frame rate in accordance with whether an image transmitted by the PC 400-1 is a moving image or a still image. In the case of a still image, the frame rate may be zero. In the case of a moving image, a relatively high frame rate is set. In this way, in the case of a still image, such as a presentation material, degradation of the handwriting performance can further be reduced. Whether or not an image is a moving image or a still image can be determined by detecting a difference in time-series images.

The input detector 15 is an example of an input receiving means, the external apparatus video obtainer 25 is an example of a video signal obtaining means, the external apparatus video controller 23 is an example of an image generating means, the FPS changer 22 is an example of a changing means, the display controller 19 is an example of a display control means, and the operation detector 21 is an example of an operation determining means.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

## Claims

1. An electronic whiteboard (200) comprising:
input receiving means (15) for receiving an input to a screen from a user;
video signal obtaining means (25) for obtaining a video signal from an information processing apparatus (400-1, 400-2);
image generating means (23) for generating image data from the video signal that has been obtained;
display control means (19) for displaying, on a display device, the image data that has been generated; and
changing means (22) for changing, in response to receipt of the input by the input receiving means (15), a frame rate of the image data displayed by the display control means (19) to a value lower than a value before the input receiving means (15) receives the input.

2. The electronic whiteboard (200) according to claim 1, further comprising:
operation determining means (21) for starting measuring a certain period in response to start of receipt of the input by the input receiving means (15),
wherein the changing means (22) keeps changing the frame rate until the certain period elapses even when the input receiving means (15) is not receiving the input.

3. The electronic whiteboard (200) according to claim 2, wherein the operation determining means (21) is configured to determine, based on the input received by the input receiving means (15), whether or not an operation is in progress.

4. The electronic whiteboard (200) according to claim 2 or 3, wherein the operation determining means (21) is configured to start measuring the certain period from a beginning every time the input receiving means (15) starts receiving the input.

5. The electronic whiteboard (200) according to any one of claims 2 to 4, wherein
the operation determining means (21) is configured to determine, after completing measuring the certain period, that an operation is not in progress, and
the changing means (22) is configured to change, in response to determination by the operation determining means (21) that the operation is not in progress, the frame rate to a pre-change value.

6. The electronic whiteboard (200) according to any one of claims 1 to 5, wherein when performing a videoconference in which image data and audio data are transmitted to another electronic whiteboard through a network and image data and audio data received from the another electronic whiteboard are output,
the changing means (22) is configured to change the frame rate based on a determination indicating whether the input receiving means (15) has received the input and a determination indicating whether the videoconference is in progress.

7. The electronic whiteboard (200) according to claim 6, further comprising:
storing means (202) for storing information about a performance of the electronic whiteboard (200),
wherein the changing means (22) is configured to change the frame rate based on a determination indicating whether the input receiving means (15) has received the input, a determination indicating whether the videoconference is in progress, and the information about the performance of the electronic whiteboard (200).

8. The electronic whiteboard (200) according to claim 7, wherein the information about the performance of the electronic whiteboard includes information indicating a type of the electronic whiteboard (200).

9. The electronic whiteboard (200) according to any one of claims 1 to 8, wherein
the image generating means (23) is configured to generate, at the frame rate changed by the changing means (22), the image data from the video signal obtained by the video signal obtaining means (25), and
the display control means (19) is configured to display the image data at the frame rate of the image data generated by the image generating means (23).

10. The electronic whiteboard (200) according to any one of claims 1 to 9, wherein the input received by the input receiving means (15) includes an input of a handwritten stroke.

11. An image display method performed by an electronic whiteboard (200), the image display method comprising:
receiving (S3) an input to a screen from a user;
obtaining (S2) a video signal from an information processing apparatus (400-1, 400-2);
generating (S8) image data from the video signal that has been obtained;
displaying (S10), on a display device, the image data that has been generated; and
changing (S7), in response to receipt of the input in the receiving, a frame rate of the image data displayed in the displaying to a value lower than a value before the input is received.

12. A carrier means carrying computer readable code for controlling a computer system to carry out the image display method of claim 11.
